# EUROPEAN PATENT APPLICATION

(11) **EP 1 433 799 A2**
(43) Date of publication of application: **30.06.2004**
(21) Application number: 02028900.5
(22) Date of filing: 23.12.2002
(51) Int. Cl.: C08F 293/00, C09J 153/00

(54) **Star shaped acrylic block copolymer**

(71) Applicant: UCB, S.A., 1070 Bruxelles (BE)
(72) Inventor: Simal, Francois, B-1190 Forest (BE); Tweedy, Harrell, Acworth, Georgia 30101 (US); Van Es, Steven, B-1180 Uccle (BE); Roose, Patrice, B-1600 St. Pieters Leeuw (BE)

(57) **Abstract**

Star shaped thermoplastic elastomer made of acrylic block copolymer, are obtained by transition metal catalysed radical polymerisation and are constituted of core arms made by monomers or mixture of monomers, whose Tg is comprised between -65°C and -20°C, and of shell arms made by monomers or mixture of monomers, whose Tg is comprised between 70°C and 160°C. The core copolymer has a polydispersity of 2 or higher and the final copolymer has a polydispersity of from 3 to 10.

## Description

The present invention relates to star shaped thermoplastic elastomers made of acrylic block copolymers and prepared by transition metal catalyzed radical polymerization. These copolymers are made of core arms with low glass transition temperatures and of shell arms with high glass transition temperatures and they have a high grade of polydispersity. The invention also relates to a process for obtaining these copolymers and to their use as adhesives such as pressure sensitive adhesives (PSA) or hot melt adhesives.

Back in the early 60's, the sector of adhesives witnessed the emergence of polyacrylates as a valuable alternative to the rubber systems used thus far. In fact, polyacrylates display many useful properties such as very good aging performance, good weather performance, and good adhesion to polar substrates. Moreover, the good reactivity and high versatility of acrylic monomers allowed them to be polymerized under mild conditions yielding in some cases adhesive properties without any additional compounding.

Although polymer solutions were used first, the interest in polymer emulsions rapidly grew with the need to avoid solvent emission problems. Whilst waterborne adhesives now hold an important share of the market, problems such as moisture sensitivity, high processing energy and most importantly, insufficient adhesive performance giving rise to loss of dimensional stability and poor resistance to shock and gasoline, represent major shortcomings for many applications.

However, adhesive manufacturers who want to retain the high-performance properties of solvents in alternative formulations that do not emit VOCs can turn to the solvent-free hot/warm-melt technology. Hot-melts are mostly based on formulated triblock thermoplastic elastomers (TPE). Typically, these TPE, in which all three segments are hydrocarbon in nature (e.g. styrene-butadiene or isoprene-styrene), are systems obtained by living anionic polymerization.

The highly stringent conditions required for such syntheses affect and limit the range of monomers and functionality that can be utilized. Moreover, those systems usually suffer from the poor oxidation stability of the unsaturated midblock and to their limited upper service temperature. In addition, the presence of unsaturated midblocks leads to a poor ageing and UV stability. In this regard, hydrogenation of these copolymers is beneficial but brings about extra costs. Increasing the cohesive strength along with lowering the viscosity is also of major concern, and radial structures have been prepared for this purpose. Anyway, as far as their intrinsic properties are concerned, these TPE show outstanding features such as high maximum elongation at break and high ultimate tensile strength.

Attempts to use polyacrylates in hot-melt systems proved to be inadequate as they do not build up as much cohesive strength as conventional hot-melts on cooling, and as their viscosity is high.

An elegant way to circumvent these issues was introduced with the concept of UV-curable polyacrylate hot-melt polymers, where chemical crosslinks formed upon irradiation ensure enough cohesive strength. But this technology is limited by a lack of consistency due to curing and by a certain coat weight. The process is rather slow and the used materials are expensive. Also, the formulation possibilities with tackifiers are quite limited.

Despite their numerous advantages, these systems still severely suffer from poor adhesion on apolar substrate and limited scope for modifications.

However, one might expect that a combination of high cohesive strength with good ageing properties could be achieved with "full acrylic" polymers. Furthermore, thanks to their physical crosslinks, these polymers should allow a thermally reversible curing of the systems and lower viscosity at processing temperature.

The synthesis of block copolymers is often difficult or impossible in conventional free radical polymerization. However, in recent times, the advent of the Controlled Radical Polymerization (CRP) has allowed the synthesis of well-defined acrylic block copolymers bearing functional groups such as hydroxyl, epoxy, ... in less stringent conditions than ionic methods.

Acrylic TPE prepared by iniferter show poor mechanical and rheological properties. Their PSA properties are poor and they are difficult to formulate with tackifiers. So far, most of the full acrylic triblocks prepared by a controlled radical process suffer from poor mechanical and PSA properties. The most promising results have been obtained with systems synthesised by living anionic polymerization, with the problems associated with this technique of the necessity to highly purify the monomers and solvents and to use stringent conditions.

At this stage, no full acrylic triblocks reaches the remarkable TPE and PSA properties set by the classical triblocks systems based on hydrocarbons.

Some publications, such as WO 2000/39233, deal with hot-melt adhesives made from full-acrylic linear or radial block copolymers mixed with tackifiers and obtained by living anionic polymerization or by controlled radical polymerization. The copolymers are well-defined materials having a polydispersity index lower than 2.0, and they have at least 2 A blocks and one B block. The compositions have a broad formulation latitude and adequate cohesive strength, without the need for a curing step.

WO 98/40415 essentially discloses a controlled free radical polymerization process of atom or group transfer radical polymerization in which the polymerization is made in presence of an initiator, a transition metal in its zero oxidation state which forms a first transition metal compound that participates in a reversible redox cycle with the initiator and a ligand which coordinate in a sigma- or pi-bond to the transition metal. This process leads to different forms of block copolymers.

WO 2000/43344 discloses branched polymers or copolymers prepared by atom transfer polymerization in the presence of an at least trifunctional alpha-halocarboxylic acid ester initiator and an oxidizable transition metal complex catalyst. When a copolymer containing 2 different monomers is made, it is done in 2 separate steps, with purification of the polymer obtained in the first step.

It has now surprisingly be found that certain acrylic star shaped block copolymers show a much more excellent heat resistance than simple chain polymers. They show an unexpected high cohesive strength along with a low viscosity. They may, or may not, be formulated with tackifiers to provide high performance PSA in solvents or hot-melt PSA without solvents. Their cohesion is as good as this of SIS on stainless steel (good resistance to high temperature, i.e. SAFT). and they present a much better cohesion, adhesion and tack on non-polar surfaces such as polyethylene. Their elongation at break is more than 2500%. Moreover, their mechanical properties, such as a high strength at break and an high elongation at break, can easily be tuned by varying monomer nature and ratios.

Thus, the present invention concerns a star shaped thermoplastic elastomer made of an acrylic copolymer, obtained by metal transition catalysed radical polymerization and constituted by core arms made by monomers, or mixture of monomers, whose Tg is comprised between -65°C and -20°C, and by shell arms made by monomers, or mixtures of monomers, whose Tg is comprised between 70°C and 160°C. the core copolymer having a polydispersity of 2 or higher and the final copolymer having a polydispersity of from 3 to 10.

Preferably, the core low Tg is from -50 to -30°C and the shell high Tg is from 100 and 150 °C.

By "star shaped", it is intended that the copolymer is obtained from an initiator which has at least a functionality of three, and preferably four or more. Thus, in the beginning of the polymerisation, the copolymer has a true shape of a star. But, by a mechanism of coupling of radicals, the arms may become branched when the polymerisation goes on. Alternatively, "star shaped" structures are obtained from the combination of a monofunctional initiator with a mixture of multifonctional (meth)acrylates, being at least tri- or tetra-acrylates.

These multifonctional (meth)acrylates are, for example, trimethylolpropane triacrylate, trimethylolpropane trimethacrylate, pentaerythrytol triacrylate, ethoxylated and propoxylated trimethylolpropane triacrylate, glyceryl propoxylated triacrylate, pentaerythritol tetra-acrylate, ditrimethylolpropane tetra-acrylate, alkoxylated tetra-acrylates, dipentaerythritol penta-acrylate or dipentaerythritol hexaacrylate.

The star shaped acrylic copolymer thus has at least three shell arms, and preferably 4 or more.

The core arms have a theoretical average number molecular weight of from 60.000 to 250.000, and preferably of from 120.000 to 200.000. The shell arms have a theoretical average number molecular weight of from 20.000 to 80.000, and preferably of from 30.000 to 60.000. The ratio of the average number molecular weight of the shell arms to the average number molecular weight of the core arms is of from 10 to 50% and preferably of from 15 to 30 %.

The core arms having low Tg are made from monomers such as methyl acrylate, ethyl acrylate, n-propyl acrylate, isopropyl acrylate, the acrylates of n-butyl, of tert.-butyl, of sec.-butyl and of isobutyl, amyl acrylates, hexyl acrylates, 2-ethylhexyl acrylate, octyl acrylates, nonyl acrylates, decyl acrylates, stearyl acrylate, lauryl acrylates and their mixtures.

The shell arms having high Tg are made from monomers such as methyl methacrylate, ethyl methacrylate, tert.-butyl acrylate, cyclohexyl methacrylate, isobornyl methacrylate and their mixtures.

In both cases, any other types of monomers such as glycidyl methacrylate, tert-butyl methacrylate, hydroxy (meth)acrylates, styrene derivatives can be readily incorporated in the core and/or the shell arms.

Preferably, the copolymer only contain acrylic derivatives (full acrylic).

If tert.-butyl acrylate is used, either in the core arms, either in the shell arms, or in both, when the copolymer has been polymerized, it can be heated at about 200°C under vacuum in order to liberate the tert.-butyl groups, leaving carboxylic acrylic acid groups along the chains of the copolymer

The arms and the core blocks are not well defined, in the sense that there is not a clear separation between the low Tg blocks and the high Tg blocks. This is due to the synthesis process, where the high Tg monomers are added to the already formed low Tg core block when the monomers of this core block have polymerized at a rate of 91-95%, preferably higher than 95%, of all the core monomers. Therefore, it is supposed that there is a gradiant zone between the low Tg core block and the high Tg shell blocks.

The process used for synthesising the copolymers of the invention is the transition metal catalysed radical polymerisation, and more particularly, the atom transfer radical polymerization (or ATRP), as described, for example, in Chemical Reviews, 2001, 101, 2921-2990, Matyjaszewski & Xia.

Many trifunctional or polyfunctional initiators may be used in ATRP, such as the complete condensation product of pentaerythritol and 2-bromoisobutyryl bromide, of pentaerythritol and 2-bromopropanoyl bromide. These initiators are tetrafunctional. Halogenated alkanes, benzylic halides, α-haloesters, α-haloketones, α-halonitriles, sulfonyl halides are potential initiators too.

The catalyst system is based on metallic salts, such as Cu(I)Br, Cu(I)Cl, Fe(II)Br, Fe(II)Cl, Ru[II], Ni[II] along with mono-, bi- or multidentate nitrogen-based ligands polyamine ligands such as 2,2'-bipyridine derivatives or as N,N,N',N',N" pentamethyldiethylenetriamine. Phosphorous-based ligands such as triphenyl phosphine, tricyclohexyl phosphine for example can also be used.

The unpurified low Tg monomers, solvent and reactants are placed together in a reactor and degazed with continuous bubbling of nitrogen for about 45 minutes. The synthesis starts from the polymerization of the low Tg monomers, in a solvent such as toluene, at a typical concentration of 60% solids. The reaction temperature is of about 90°C to 110°C. and the reaction is continued for 8 to 16 hours, until the monomers conversion is of from 91 to 95%, preferably higher than 95%. The high Tg monomers previously degazed under the same conditions are then added in one shot to the reaction mixture containing the core polymer, without purification thereof. The polymerization is stopped after 12 to 16 hours, until the final monomer conversion is higher than 95%.

A non-solvent for the copolymer, such as an alcohol is then added to the reaction mixture. The copolymer precipitates, is filtered and dried.

Alternatively, super-critical fluid extraction can be employed to remove residual monomer(s), solvent(s) and transition-metal catalyst. Dense phase CO₂ appears to be a technically possible medium for the purification of the ATRP polymers of the type claimed herein. Extraction of reactive component residues (acrylated/methacrylated monomers), residual solvent (toluene), extraction of transition-metal catalyst (with co-solvent present) is compatible with CO₂ extraction techniques.

If Cu(I) is used as catalyst, the addition of metallic copper Cu(O) (about 10% in weight relative to the Cu(I) salt) regenerates the inactive Cu(II) salts formed by the oxygen remaining in the reaction mixture into active Cu(I) salts. This addition of Cu(0) brings about higher conversions of the monomers and shorter reaction times. If this addition has a more pronouced effect during the second stage of the shell polymerization, it has also an effect if it is added also at the beginning of the first stage of the core polymerization

The ratio between the initiator and the low and high Tg monomers will fix the various block lengths, and therefore also the ratio between the low Tg core blocks and high Tg shell blocks. This ratio between monomers and initiator varies between 300 and 1800, in moles and preferably between 600 and 1200. The ratio in moles between the initiator and the copper catalyst is fixed at 1:4 for a tetrafunctional initiator, but a reduced amount of copper salt such as 1:3 or 1:2 can also be used. The ratio of ligand to copper is 1.

The copolymer according to the invention may be used as such, but it can also be mixed with additives such as tackifiers, at a ratio of 5 to 150 phr of the tackifier, preferably 25 to 150 phr, calculated on the weight of the copolymer. The tackifier should be selectively compatible with the core soft Tg blocks, but not compatible with both the core soft Tg block and the shell hard Tg blocks.

Tackifiers, which can be used, are, for example, hydrogenated rosin esters such as Foral 85 E (based on glycerol, mixture of di- and triesters) and Foral 105 E (based on pentaerythritol, tri- and teraesters, both products being trademarks of Eastman Chemicals), or the phtalate ester of hydroabietyl alcohol, such as Cellolyn 21E (TM of Eastman), or terpene phenolics, or polyterpene, hydrogenated or non-hydrogenated hydrocarbon resins, such as Escorez 1310, 2420 and 5380 (TM of Exxon) or Regalrez 1018 or Regalite 1010 (TM of Eastman) or Piccotac 95, 212 and 6095-E (TM of Eastman) or Norsolene S115 (TM of Sartomer).

Plasticizer can also be used as additives at a ratio of 5 to 25 phr, in combination or not with tackifier(s). Plasticizers which can be used, are, for example, hydrocarbon oils (aromatic, paraffinic, or naphtenic) such as Edelex 945, Edelex 956 or Oil 8777 (TM of Shell), hydrocarbon resins, phtalates, and combinations thereof.

The copolymers of the invention can be used in a variety of applications in the automotive, construction, medical, personal care, food and beverage, electrical (wire and cable), appliance, sports and leisure fields. They are also usable as (pressure sensitive) adhesives for tapes and labels, as sealants, coatings, sound deadening compounds, in pipeline protection, in bitumen modification, in footwear applications, in food packaging.

The examples, which follow, illustrate the invention without limiting it.

### Example 1. Synthesis of copolymers.

To a dry glass tube, cupric bromide (CuBr) is added. Using degassed syringes, N,N,N',N',N"-pentamethyldiethylenetriamine (PMDETA, 0.1M in toluene) as ligand is added to the tube, along with degassed core monomers, toluene and dodecane as solvents and 2-bromoisobutyrate of pentaerythritol (PEEiBr) as initiator. The tube is sealed with a rubber septum and three freeze-pump-thaw cycles are performed. The tube is then immersed in an oil bath held at 90°C by a thermostat. When the conversion of the monomers reaches 91 to 95%, or more, the degassed shell monomers are added in one shot. The reaction is left at 90°C until sufficiently high conversion of shell monomers is attained. The copolymer is then diluted with toluene, precipitated in methanol, filtered and dried under vacuum at 80°C for a few hours.

### Example 2. Extraction with supercritical CO₂

The synthesized ATRP polymer 4 containing CuBr/PMDETA catalyst, aromatic solvent (toluene), and (meth)acrylate monomer was charged to a Soxhlet extraction thimble and loaded into an extraction cell. A polar extraction co-solvent (methanol or water) was also added to the extraction cell by adsorbing it on to an inert solid. The extraction cell was placed into the Supercritical Extraction Equipment and the system pressurized to 300 bar with CO₂ and heated to 65°C. Controlled and continuous CO₂ depressurization and extraction of the extraction cell contents was conducted for several hours by passing the depressurized CO₂ through a collection tube chilled with dry ice. Testing of the collection tube contents for the presence of copper gave a positive result, indicating Cu extraction by the CO₂-polar co-solvent mixture.

An extraction performed in essentially the same manner without the addition of a polar co-solvent (water or methanol) showed a negative response to Cu testing.

The use of co-solvent lead also for rapid extraction of residual monomers and solvent.

In Table 1 below, the quantities of reactants, the conversions, determined by gaz chromotagraphy , the reaction time of the different stages and the polydispersity (determined by size exclusion chromatography using THF as the eluent. PS standards were used to calibrate the column), are given

**Table 1**

| Copolymer 1 (comparative) | | | | |
|---|---|---|---|---|
| Core block | Amounts | Conversion % | Time H | Dispersity |
| nBuA | 30 ml | nBuA: 87,9 | 7 | 2,0 |
| PEEiBr | 163,6 mg | | | |
| CuBr | 128,2 mg | | | |
| PMDETA | 8,94 ml | | | |
| Toluene | 9,60 ml | | | |
| Dodecane | 1,50 ml | | | |
| Shell block | | | | |
| MMA | 2,9 ml | MMA: 86,7 | 15,3 | 3,0 |
| IBMA | 4,1 ml | IBMA: 90,4 | | |
| | | nBuA: 96.5 | | |

| Copolymer 2 (comparative) | | | | |
|---|---|---|---|---|
| Core block | Amounts | Conversion % | Time H | Dispersity |
| nBuA | 30 ml | nBuA: 91,6 | 9,4 | 2,7 |
| PEEiBr | 163,6 mg | | | |
| CuBr | 128,2 mg | | | |
| PMDETA | 8,94 ml | | | |
| Toluene | 9,60 ml | | | |
| Dodecane | 1,50 ml | | | |
| Shell block | | | | |
| MMA | 2,9 ml | MMA: 95,5 | 16,1 | 3,7 |
| IBMA | 4,1 ml | IBMA: 92, 7 | | |
| | | nBuA: 98,2 | | |

| Copolymer 3 (comparative) | | | | |
|---|---|---|---|---|
| Core block | Amounts | Conversion % | Time H | Dispersity |
| nBuA | 30 ml | nBuA: 91,2 | 10,4 | 2,4 |
| PEEiBr | 163,6 mg | | | |
| CuBr | 128,2 mg | | | |
| PMDETA | 8,94 ml | | | |
| Toluene | 9,60 ml | | | |
| Dodecane | 1,50 ml | | | |
| Shell block | | | | |
| MMA | 2,9 ml | MMA: 87.5 | 16,2 | 4,0 |
| IBMA | 4,1 ml | IBMA: 91.3 | | |
| | | nBuA: 97.8 | | |

| Copolymer 4 | | | | |
|---|---|---|---|---|
| Core block | Amounts | Conversion % | Time H | Polydispersity |
| nBuA | 200 ml | nBuA: 99,3 | 11.0 | 2.5 |
| PEEiBr | 1090 mg | | | |
| CuBr | 854.7 mg | | | |
| Cu(0) | 37mg | | | |
| PMDETA | 1.24 ml | | | |
| Toluene | 122 ml | | | |
| Dodecane | 10 ml | | | |
| Shell block | | | | |
| MMA | 19.1 ml | MMA: 98,2 | 14,75 | 4.2 |
| IBMA | 27.3 ml | IBMA: 94,6 | | |
| | | nBuA: 99,4 | | |
| Cu(0) | 37mg | | | |

| Copolymer 5 | | | | |
|---|---|---|---|---|
| Core block | Amounts | Conversion % | Time H | Polydispersity |
| 2-EHA | 30 ml | 2-EHA: 98.3 | 16.4 | 3.1 |
| PEEiBr | 163,6 mg | | | |
| CuBr | 128,2 mg | | | |
| PMDETA | 8,94 ml | | | |
| Toluene | 9,60 ml | | | |
| Dodecane | 1,50 ml | | | |
| Shell block | | | | |
| MMA | 2,9 ml | 2-EHA: 99.2 | 15.6 | 4.8 |

| Copolymer 6 | | | | |
|---|---|---|---|---|
| Core block | Amounts | Conversion % | Time H | Polydispersity |
| 2-EHA | 30 ml | 2-EHA: 95.6 | 16.1 | 3.4 |
| MA | 16.7ml | MA: 96.2 | | |
| PEEiBr | 163,6 mg | | | |
| CuBr | 128,2 mg | | | |
| PMDETA | 8,94 ml | | | |
| Toluene | 9,60 ml | | | |
| Dodecane | 1,50 ml | | | |
| Shell block | | | | |
| MMA | 2,9 ml | MMA: 95.1 | 16.4 | 4.7 |
| | | 2-EHA: 99.1 | | |
| | | MA: 98.9 | | |

| Copolymer 7 | | | | |
|---|---|---|---|---|
| Core block | Amounts | Conversion % | Time H | Polydispersity |
| 2-EHA | 42 ml | 2-EHA: 98.9 | 16.75 | 3.3 |
| MA | 16.7ml | MA: 98.8 | | |
| PEEiBr | 261,0 mg | | | |
| CuBr | 204,6 mg | | | |
| PMDETA | 14,27 ml | | | |
| Toluene | 22,8 ml | | | |
| Dodecane | 2,0 ml | | | |
| Shell block | | | | |
| MMA | 10,2 ml | MMA: 96.1 | 16.1 | 5.2 |
| tBuA | 1,2 ml | 2-EHA: 99.8 | | |
| | | MA: 100 | | |

| Copolymer 8 | | | | |
|---|---|---|---|---|
| Core block | Amounts | Conversion % | Time H | Polydispersity |
| 2-EHA | 48 ml | 2-EHA: 99.1 | 15.8 | 3.1 |
| MA | 11.1 ml | MA: 98.9 | | |
| PEEiBr | 238.5 mg | | | |
| CuBr | 187.0 mg | | | |
| PMDETA | 13.04 ml | | | |
| Toluene | 24.4 ml | | | |
| Dodecane | 2,0 ml | | | |
| Shell block | | | | |
| MMA | 17 ml | MMA: 98.1 | 16.5 | 4.5 |
| | | 2-EHA: 99.9 | | |
| | | MA: 100 | | |

**Table 2**

| Ref. | Coreblock Composition (wt %) | | | Block length | Tg in °C | Shellblock Composition (wt %) | | | Block length | Tg in °C |
|---|---|---|---|---|---|---|---|---|---|---|
| | nBuA | 2EHA | MA | | | MMA | IBMA | tBuA | | |
| Copo 1 | 100 | - | - | 120K | -48 | 40 | 60 | - | 30K | 145 |
| Copo 2 | 100 | - | - | 120K | -48 | 40 | 60 | - | 30K | 145 |
| Copo 3 | 100 | - | - | 120K | -48 | 40 | 60 | - | 30K | 145 |
| Copo 4 | 100 | - | - | 120K | -48 | 40 | 60 | - | 30K | 145 |
| Copo 5 | - | 100 | - | 200K | -64 | 100 | - | - | 40K | 105 |
| Copo 6 | - | 60 | 40 | 200K | -38 | 100 | - | - | 40K | 105 |
| Copo 7 | - | 52 | 48 | 200K | -32 | 98.5 | - | 1.5 | 40K | 110 |
| Copo 8 | - | 65 | 35 | 200K | -42 | 100 | - | - | 60K | 105 |

In Tables 1 and 2, following abbreviations for the monomers have been used:
nBuA: n-butyl acrylate
MMA: methyl methacrylate
IBMA: isobornyl methacrylate
2-EHA: 2-ethylhexyl acrylate
MA: methyl acrylate
tBuA: tert.-butyl acrylate

The block lengths are the theoretical molecular weight.

Thermal transition temperatures (Tg) were determined by differential scanning calorimetry using a TA Q10 instrument. In order to remove thermal memory effects, the sample (≈ 10 mg) was quenched after a first DSC scan. The sample were submitted to a second heating run using a 20 °C/min temperature ramp for the determination of the glass transition temperatures. The experimental procedure as well as the data treatment follows the standard guidelines of ASTM 3418.

### Example 3. Physical properties of copolymers alone or blended with tackifiers.

The copolymers have been tested alone, or blended with various tackifiers in different ratios.
Different physical properties were determined as follows.

*Rheological measurements:* Viscosity data were determined over the shear rate range 1 - 1000 s⁻¹ using a Paar-Physica UDS 200 rheometer configured in a cone-and-plate geometry (plate diameter: 25 mm; cone angle: 2°; cone-plate gap: 50 µm). The measurements were conducted in isothermal conditions at various temperatures.

### The Measurement of the adhesive properties were made as follows :

*Sample preparation:* Adhesives of the invention are coated using a solvent-based method (toluene). The composition have been coated directly on the substrate (polyester (23µm)) with an automatic bar (knife) coater (Bar speed = 3, Bar height = 120 to 125µn for 40% solids polymer solution).
The film weight is equal to 30 +/- 3 g/m2. It is then dried for 5min at RT and 3min at 110°C, and finally applied on siliconized paper by putting equal pressure on each film (between 2 cylinders).

The dry adhesive coatings are preconditioned for 24h in conditioned room and then tested at 23 °C and 50% relative humidity.

The test methods used to evaluate the PSA coated flexible sheet materials of the following examples are industry standard tests which are described in FINAT (Finat Technical Guide, 4^{th} edition, 1995).

### Shear on steel, according to FTM 8

Adhesion on stainless steel (SS) after 20 minutes and 24 H, according to FTM 1 Adhesion on polyethylene films (PE) after 20 minutes and 24 H, according to FTM 1 Loop on stainless steel and on polyethylene films according to FTM 9 SAFT at 0,5°C/min according to FTM 5

### Following compositions have been tested:

SIS comp. :100phr of the block copolymer styrene-isoprene-styrene (SIS) known as Kraton D1161 (TM of Kraton) with 125phr Piccotac 212 (TM of Eastman), with 25phr Edelex 956 (TM of Shell) and 3phr of Irganox 1010 (TM of Ciba)
Comp 1a: 100phr of copolymer 1 with 50phr of Foral 85
Comp 1b: 100phr of copolymer 1 with 70phr of Foral 85
Comp 2: 100phr of copolymer 2 with 50phr of Foral 85
Comp 3: 100phr of copolymer 3 with 50phr of Foral 85
Comp 4a: 100phr of copolymer 4 with 25phr of Foral 85E
Comp 4b: 100phr of copolymer 4 with 50phr Foral 85E
Comp 4c: 100phr of copolymer 4 with 100phr Cellolyn 21E
Comp 5: 100phr of copolymer 5 with 100 phr of Foral 85E
Comp 6a: 100phr of copolymer 6 with 75 phr of Foral 85E
Comp 6b: 100phr of copolymer 6 with 125 phr of Cellolyn 21E
Comp 7: 100phr of copo 7 with 50phr of Foral 85E
Comp 8a: 100phr of copo 8 with 100phr of Foral 85E
Comp 8b: 100phr of copo 8 with 100phr of Foral 85E and 5phr of Plasticizer (Edelex 945)

The results are given in Table 3 and 4

**Table 3**

| | SIS Comp | Comp 1a | Comp 1b | Comp 2 | Comp 3 |
|---|---|---|---|---|---|
| Shear on steel, 1x1 inch, 1Kg, face alu, in min | > 10000 | 352 | 702 | 1484 | 430 |
| Adhesion on SS, 20 min, in N/25 mm | 15.0 | 12,4 | 13,5 | 19,2 | 19 |
| Adhesion on SS, 24H, in N/25 mm | 15.8 | 14,5 | 15,5 | 21,3 | 21,5 |
| Adhesion on PE, 20 min, in N/25 mm | 8.8 | 8,9 | 7,9 | 7,7 SS | 11,4 |
| Adhesion on PE, 24H, in N/25 mm | 8.5 | 12,2 | 11,3 | 8,9 SS | 12,3 |
| Loop on SS, in N/25 mm | 20.7 | 14,3 | 10,7 | 5,0 | 14,2 |
| Loop on PE, in N/25 mm | 9.1 | 4,1 | 2,7 | 2,2 | 8,2 |
| SAFT 0,5°C/min, face alu, in °C in min | 87 | 56 CF | 58 CF | - | - |
| | 124 | 12 | 12,5 | - | - |

From Table 3 it can be seen for the comparative compositions 1 to 3 that:
- Formulated SIS stands as a reference material especially for its high cohesion (high shear value) and good temperature resistance (high SAFT value, i.e. 87 °C)
- Comp 1: poorly defined endblocks (gradient zone between soft and hard blocks too important results in too short endblocks (and limited conversion of MMA) and thus too low cohesion)
- Comp 2: poorly defined endblocks (gradient zone between soft and hard blocks too important, conversion of nBuA too low) results in too short endblocks and thus too low cohesion
- Comp 3: poorly defined endblocks (gradient zone between soft and hard blocks too important, conversion of nBuA and MMA too low) results in too short endblocks and thus too low cohesion.

In most cases:
- SAFT values are too low compared to formulated SIS
- Slip-stick is present (in all cases) when loop-tack tests are performed

From Table 4 it can be seen for the compositions according to the invention that:
- Comp 4: well-defined endblocks results in good overall PSA properties, especially cohesion. Formulation with Cellolyn21E (Comp 4c) gives cohesion as good as with formulated SIS. Moreover, very high adhesion on SS (polar substrate) and PE (low surface energy) have been measured. This is a very original and interesting feature.
- High cohesion (shear) can be obtained without using IBMA. Very high cohesion are reached with copo 6 formulated with 75phr of Foral 85E (> 600h with 16 PSI, i.e. 0.5 x 0.5 inch x 2kg). Again good level of adhesion of both polar and non-polar substrates. Very high SAFT value measured also (actually greater than the formulated SIS, i.e. reference).
- But slip-stick observed during peel and LT tests, which can be circumvented by the use of tBuA in the hard blocks (see compo 7). High cohesive strength and very high SAFT (100 °C).
- Adding a small portion (5phr) of a mineral oil (acting as a plasticizer) suppresses also slip-stick phenomena, while keeping overal PSA properties the same (see Compo 8a and Compo 8b).

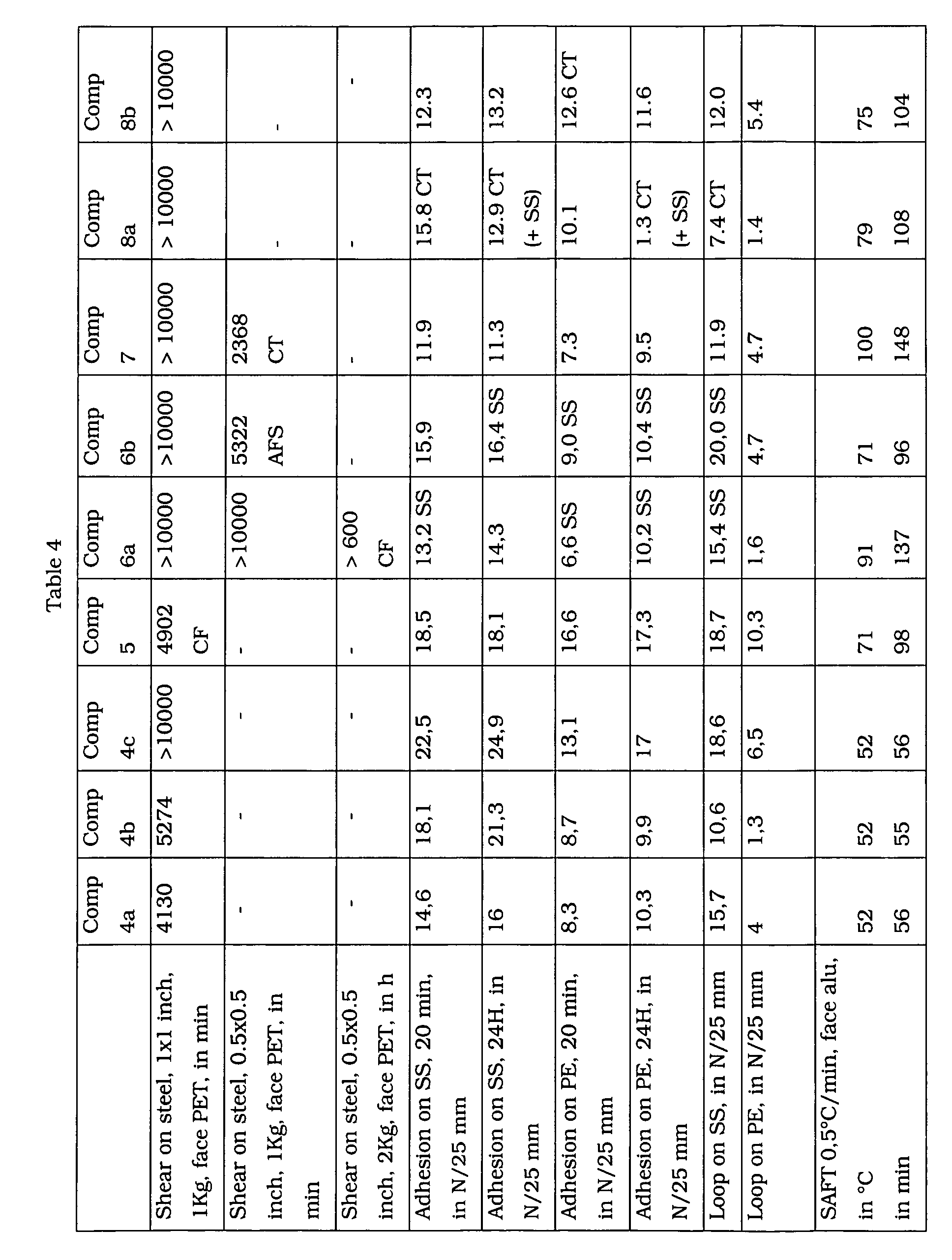

### Viscosity of formulated and non-formulated co-polymers

**Table 5**

| Viscosity (Pa.s) | SIS Comp | Comp 1 | Copo 4 | Comp 4c |
|---|---|---|---|---|
| 180 ° (104 s⁻¹) | 8.5 | 8.7 | 32.0 | 6.4 |

From Table 5, it is shown that viscosity of formulated full-acrylic TPE (as in Compo 4c) is lower than that of SIS Comp.

## Claims

1. Star shaped thermoplastic elastomer made of acrylic block copolymer, obtained by transition metal catalysed radical polymerisation and constituted of core arms made by monomers or mixture of monomers, whose Tg is comprised between - 65°C and -20°C, and of shell arms made by monomers or mixture of monomers, whose Tg is comprised between 70°C and 160°C. the core copolymer having a polydispersity of 2 or higher and the final copolymer having a polydispersity of from 3 to 10.

2. Star shaped acrylic block copolymer according to claim 1, wherein the core arms have a theoretical number average molecular weight of from 60.000 to 250.000, and the shell arms have a theoretical number average molecular weight of from 20.000 to 80.000.

3. Star shaped acrylic block copolymer according to claims 1 or 2, wherein the ratio of the number average molecular weight of the shell arms to the number average molecular weight of the shell and core arms is from 10 to 50%.

4. Star shaped acrylic block copolymer according to any of claims 1 to 3, wherein the monomers of the core arms are selected from the group consisting of methyl acrylate, ethyl acrylate, n-propyl acrylate, isopropyl acrylate, the acrylates of n-butyl, of tert.-butyl, of sec.-butyl and of isobutyl, amyl acrylates, hexyl acrylates, 2-ethylhexyl acrylate, octyl acrylates, nonyl acrylates, decyl acrylates, stearyl acrylate, lauryl acrylates and their mixtures.

5. Star shaped acrylic block copolymer according to any of claims 1 to 4, wherein the monomers of the shell arms are selected from the group consisting of methyl methacrylate, ethyl methacrylate, tert.-butyl acrylate, cyclohexyl methacrylate, isobornyl methacrylate and their mixtures.

6. Star shaped acrylic block copolymer according to any of claims 1 to 5, wherein the core and the shell arms further comprises monomers selected from the group consisting of glycidyl methacrylate, tert-butyl methacrylate, hydroxy (meth)acrylates, styrene and derivatives thereof.

7. Process for producing a star shaped thermoplastic elastomer made of acrylic block copolymer according to any of claims 1 to 6, wherein
(a) an initiator which has at least three active functionalities is first placed in the reaction mixture, along with a transition metal complex and an amine ligand. or an initiator which has only one active functionality is used and at least tri-functional acrylate monomers are first copolymerized in (b) for making the core arms.
(b) the monomer or mixture of monomers for making the core arms are then polymerized till a conversion ratio of from 91 to 95%, preferably higher than 95% by weight, calculated on the total weight of the monomers of the core arms;
(c) the monomer or mixture of monomers for making the shell arms are then put into the reaction mixture, whitout any purification thereof, and polymerized till a conversion ratio of at least 95% by weight, calculated on the total weight of the monomers of the shell arms
(d) optionally, the tert-butylacrylate groups eventually present in the core arms or in the shell arms or both are hydolyzed in acrylic acid by heating.
(e) the copolymer is purified from the reaction mixture

8. Process according to claim 7, wherein the transition metal complex to be used as the catalyst for atom transfer radical polymerization comprises at least one metal complex of copper(I).

9. Process according to claims 7 or 8, wherein Cu(0) is also added in the reaction mixture.

10. Process according to claims 7 to 9, wherein the copolymer is purified by putting a non-solvent of copolymer in the reaction mixture.

11. Process according to claims 7 to 9, wherein the copolymer is purified by super-critical CO₂ extraction in presence of a polar cosolvent.

12. Adhesive comprising a star shaped thermoplastic elastomer made of acrylic block copolymer according to any of claims 1 to 6.

13. Adhesive according to claim 12 further comprising from 5 to 150% phr of a tackifier, calculated on the weight of the copolymer.

14. Use of the adhesive of claims 12 or 13 as pressure sensitive adhesive or as hot-melt adhesive.

15. Use of the adhesive of claims 12 to 14 in the automotive, construction, medical, personal care, food and beverage, electrical, appliance, sports and leisure fields, for tapes and labels, as sealants, coatings, sound deadening compounds, in pipeline protection, in bitumen modification, in footwear applications and in food packaging.
